Europäisches Patentamt

European Patent Office

Office européen des brevets

(11) Publication number: **0 058 402**
**B1**

(12) **EUROPEAN PATENT SPECIFICATION**

(45) Date of publication of patent specification: **19.12.84**

�defineInt. Cl.³: **H 02 B 13/06**

(21) Application number: **82101024.6**

(22) Date of filing: **11.02.82**

(54) Gas-insulated switchgear.

(30) Priority: **12.02.81 JP 19492/81**
**22.07.81 JP 107717/81 U**

(43) Date of publication of application:
**25.08.82 Bulletin 82/34**

(45) Publication of the grant of the patent:
**19.12.84 Bulletin 84/51**

(84) Designated Contracting States:
**CH DE FR LI**

(56) References cited:
**CH-A- 402 116**
**DE-B-1 183 988**
**FR-A-1 382 896**

(73) Proprietor: **Kabushiki Kaisha Toshiba**
**72, Horikawa-cho Saiwai-ku**
**Kawasaki-shi Kanagawa-ken 210 (JP)**

(72) Inventor: **Haginomori, Eiichi**
**1-10-26, Shouan Suginami-ku**
**Tokyo (JP)**

(74) Representative: **Blumbach Weser Bergen**
**Kramer Zwirner Hoffmann Patentanwälte**
**Radeckestrasse 43**
**D-8000 München 60 (DE)**

EP 0 058 402 B1

Courier Press, Leamington Spa, England.

## Description

The present invention relates to an insulated power switchgear apparatus, more particularly to an improvement in an insulated power switchgear apparatus suitable for superhigh voltage power substations or power switching stations.

Electric power substations or electric power switching stations in or around big cities or seaside areas tend to be constructed in the form of what are called "compact substations or switching stations" in which the electrical component devices are sealed in an insulating gas or immersed in an insulating oil, because of the difficulty in acquiring adequate land or in order to prevent salt from causing problems.

In order to sharply reduce the area of land required, the above-mentioned type of compact substation is so constructed that the devices required therein are arranged in three dimensions and are connected by means of insulated bus bars sealing such insulating fluid as $SF_6$ gas.

In order to provide a gas-insulated power switchgear apparatus having improved earthquake-proofness, US—PS 4 032 820 disclosed a gas-insulated switchgear characterized in that the main component devices including the circuit breakers, current transformers, disconnecting switches and feeder bus bars, are arranged in at least one straight line in one horizontal plane, while the main bus bars are disposed substantially at right angles to the direction of arrangement of the above-mentioned main component devices, in a second plane parallel to the plane in which the main component devices are arranged. The gas-insulated switchgear as described in US—PS 4 032 820 cannot make it possible to sharply reduce the area of land occupied by the gas-insulated switchgear, because the whole of the insulated switchgear apparatus built around the circuit breakers is arranged to be low in height in order to improve the earthquake-proofness of the apparatus.

Accordingly, there is a need for a gas-insulated switchgear which makes it possible not only to improve the earthquake-proofness of the apparatus, but also to sharply reduce the required area of the land on which the apparatus is built.

A number of different gas-insulated switchgear constructions have already been put forward, with many different types of disconnecting switches used therein. The disconnecting switches, therefore, have the disadvantage that they are difficult to standardize and the manufacturing costs of the equipment as a whole are increased.

The present invention is directed to dealing with the above disadvantages and has as its object in one embodiment described herein the provision of a gas-insulated switchgear having the comparatively heavy circuit breaker underneath, i.e. at a low level, and current transformers, disconnecting switches, ground switches and the like above the circuit breakers in two directions, connected through feeder bus bars. Further, main bus bars are appropriately positioned above the circuit breakers.

Another object of the present invention is to lower the manufacturing costs of the gas-insulated switchgear by standardizing the principal components of the disconnecting switches.

Accordingly, the invention provides a gas-insulated switchgear as set forth in claim 1. Further advantageous features are set forth in claims 2, 3 and 4.

Two examples of the present invention will be described below with reference to the drawings in which:

Fig. 1 is a basic outline diagram of a substation in a double-bus system;

Fig. 2 is a view showing a first example of a gas-insulated switchgear according to the present invention;

Fig. 3 is a side view showing the disconnecting section for the main bus of the Fig. 2 example;

Fig. 4 is a cross sectional view showing the construction of a disconnecting switch of the Fig. 2 example;

Fig. 5 is a cross sectional view showing the construction of a circuit breaker of the Fig. 2 example;

Fig. 6 is a plan view showing a further example of a gas-insulated switchgear for a three-phase line according to the present invention;

Fig. 7 is a sectional view taken along line VII—VII of Fig. 6;

Fig. 8 is a cross sectional view showing the construction of a disconnecting switch different from that shown in Fig. 4.

Fig. 9 is a side view showing the disconnecting switch of Fig. 8;

Fig. 10 (a) and (b) and Figs. 11 (a) and (b) are front and side views showing bus disconnecting switches, respectively; and

Fig. 12 is a cross sectional view showing the construction of a circuit breaker used in the second example shown in Fig. 6.

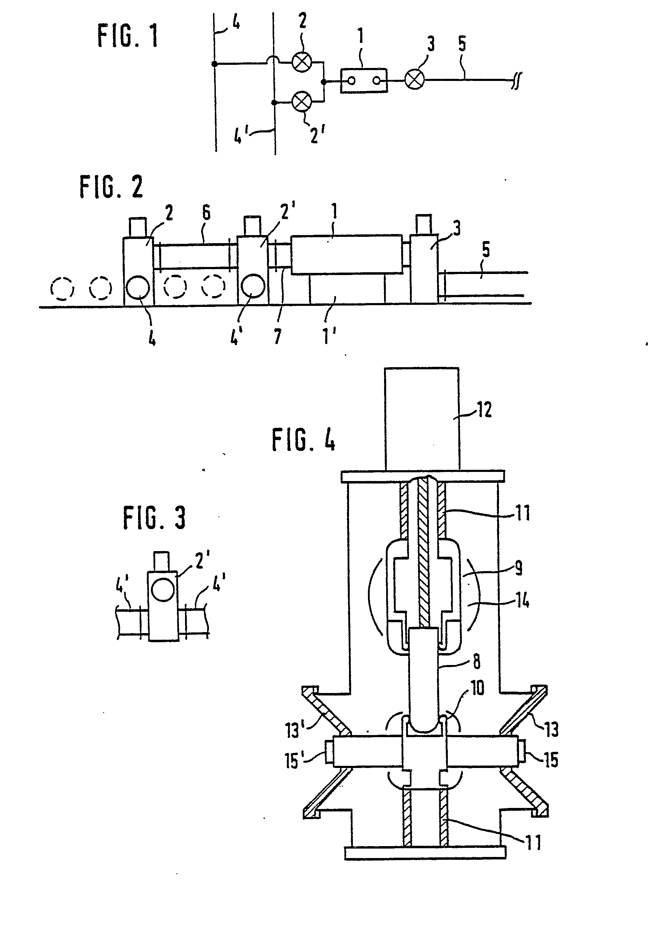

Fig. 1 is a basic diagram of a double-bus system substation. In Fig. 1, numeral 1 is a circuit breaker; numerals 2, 2' are disconnecting switches for the main buses; numeral 3 is a disconnecting switch for the outgoing bus 5; and numerals 4, 4' are main buses.

Fig. 2 shows one example of the gas-insulated switchgear forming the arrangement shown in Fig. 1.

Each of the disconnecting switches 2 and 2' for the main buses 4 and 4' and the disconnecting switch 3 for the outgoing bus 5, respectively, is of vertically elongate construction and comprises lower and upper terminal or outlet sections. The lower terminal sections are set at the same height as the main buses 4 and 4' and the outgoing bus 5. The gas circuit breaker 1 is arranged horizontally. Numeral 6 is a link bus which connects the two disconnecting switches 2, 2' and numeral 7 is a link bus which connects the gas circuit breaker 1 and the disconnecting switch 2'.

The upper terminal sections of each of the disconnecting switches 2, 2' and 3 are raised to the same level as the terminal sections of the circuit breaker 1. In this case, it may sometimes be necessary to insert suitable supports 1' under the circuit breaker 1 to adjust the height of the circuit breaker. The supports are used merely to support the circuit breaker horizontally at a relatively low level and therefore there will not be any problem as to the manufacture and strength of the supports.

Fig. 3 is a side view of the disconnecting switch 2' of Fig. 2 in which the main buses 4, 4' are connected to the lower terminal sections. It will be seen that the disconnecting switch 2' serves as a part of the main bus, in its length.

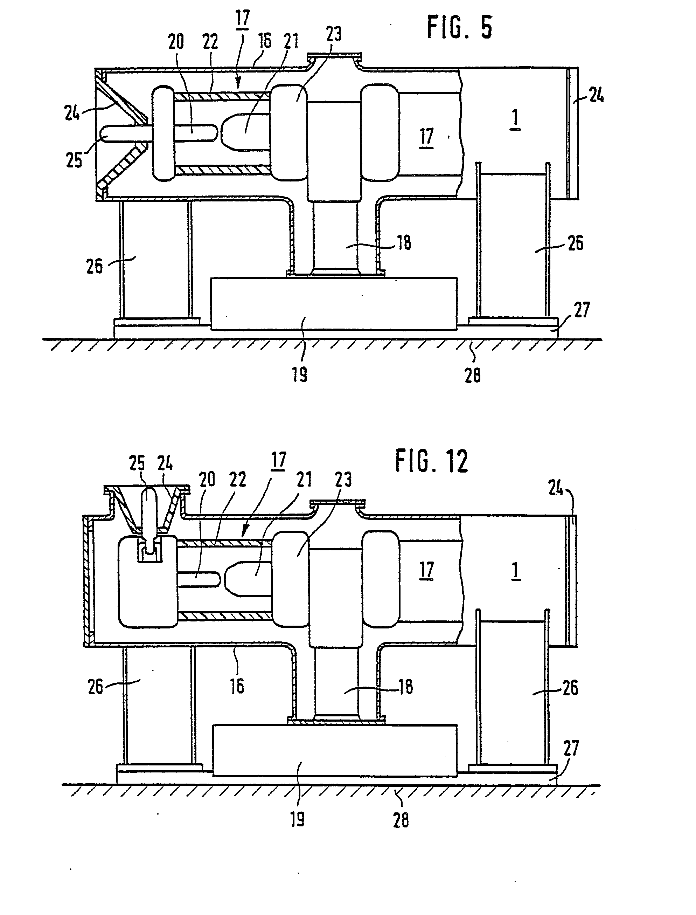

Fig. 4 shows an example of the internal construction of one of the vertically disposed disconnecting switches in which a moving contact 8 of a moving contact support section 9 is removably inserted into a fixed contact support section 10. The sections 9 and 10 are mounted axially in a cylindrical container, at the top and bottom ends thereof, by supporting insulating tubes 11. The moving contact 8 is adapted to be operated by a control system (not shown) contained in a control system housing 12. Further, insulating spacers 13, 13' are disposed at prescribed positions in the lower terminal section of the switch while upper terminal insulating spacers 14 are placed at a prescribed position in the upper section.

Respective conductors 15 and 15' pass sealingly through the middle of each of the insulating spacers 13, 13'. In the same way, a conductor (not shown) passes sealingly through the middle of the spacers 14.

With the above-described design, the disconnecting switches 2, 2' for the main buses 4, 4' and the disconnecting switch 3 for the outgoing bus, excepting their terminal sections, can be made with a common basic construction, for standardization of the equipment. In addition, the circuit breaker 1, the disconnecting switches 2, 2' and 3 at respective outlets, main buses 4, 4' and outgoing bus 5 can all be installed on the same level foundation so that the equipment can be installed efficiently and moreover is thereby highly proof against earthquake. Furthermore, the construction of the equipment can be made simple because of the simplified direct connection by the buses between the various parts of the equipment. In the construction of the disconnecting switch, as shown in particular in Fig. 4, major internal parts as well as the housing are arranged or constructed bilaterally symmetrically, so that the moving and fixed contacts are less liable to deflection which could be caused by thermal expansion and pressure deformation, and can readily be adopted in large-sized equipment. Further, as is clear from Fig. 3, the length of the main bus can be reduced by the size of the portion between the terminal sections of the disconnecting switches.

Fig. 5 is a partly broken-away view showing more details of a gas circuit breaker. In Fig. 5, the gas circuit breaker 1 comprises a plurality of breaker sections 17 supported by a hollow insulating cylinder 18 within a tank 16 filled with $SF_6$ gas. The breaker sections 17 are adapted to be operated by a control system (not shown) contained in a control system housing 19.

Each of the breaker sections 17 comprises a fixed contact 20 and a movable contact 21 opposite thereto. The fixed contact 20 is supported on a movable contact support section 23 by a hollow insulating cylinder 22. The longitudinal ends of the tank 16 are provided with conical insulating spacers 24, for also confining the $SF_6$ gas.

Conductors 25 pass sealingly through the middle of the insulating spacers 24. The tank 16 is supported on a foundation 28 by a common base 27 and supports 26.

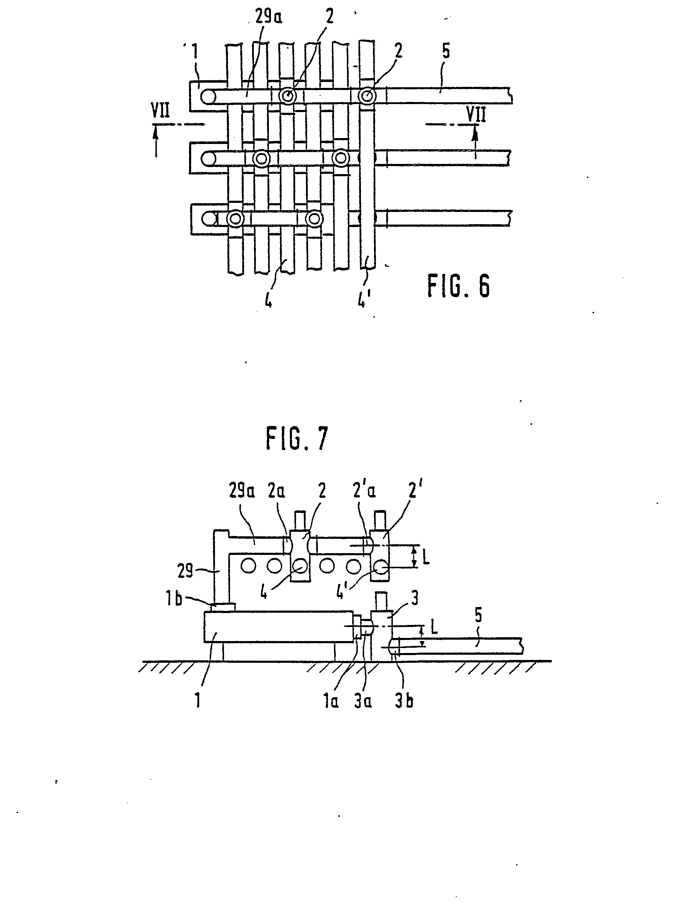

The second embodiment shown in Figs. 6 and 7 also corresponds to the diagram of Fig. 1.

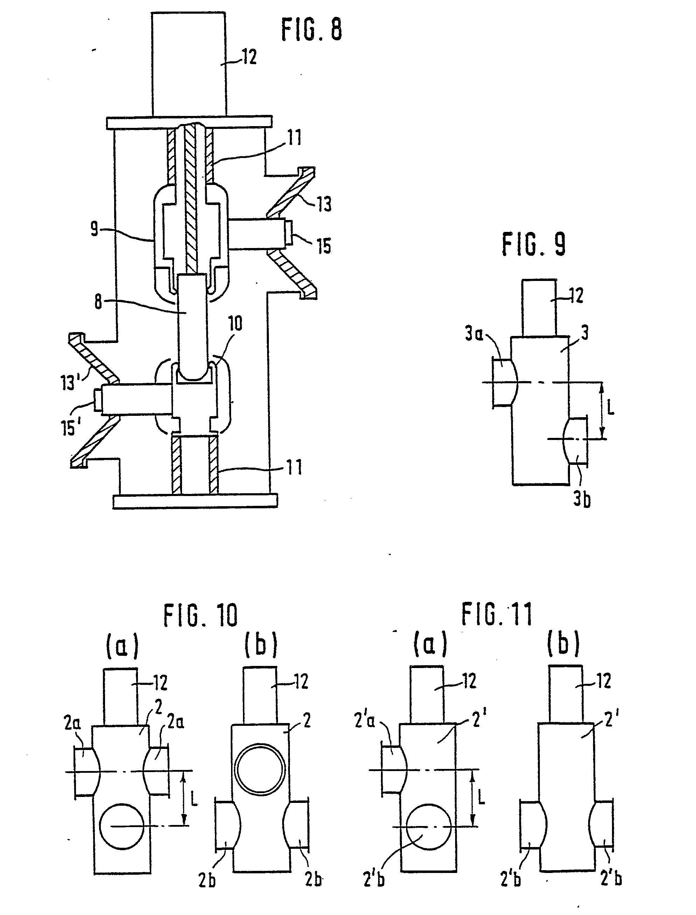

Figs. 6 and 7 show gas-insulated switchgears for a three-phase line installed at the main bus of a double-bus system. In the switchgear of each phase, the upper terminal section 3a of a vertical-type line disconnecting switch 3 (see Figs. 8 and 9) is connected to a terminal section 1a at one end of each circuit breaker 1 which is disposed horizontally. One end of a horizontally disposed line link bus 5 is connected to the lower terminal section 3b, and the other end of the bus 5 is connected for example to a bushing connected to an overhead line. The main buses 4, 4' of the double-bus system are disposed horizontally and at right angles with respect to the direction of installation of the circuit breaker 1, and above the circuit breaker 1. Also, a horizontally extended portion 29a of a bus link bus 29, the latter being connected to the other terminal section 1b of the circuit breaker 1, is disposed at right angles with respect to the direction of installation of the main buses 4, 4' and above the main buses 4, 4', and is inserted, at its midpoint, into a pair of terminals 2a disposed at opposite positions in the upper part of a bus disconnecting switch 2 (see Fig. 10). Further, the main bus 4 is inserted in a pair of terminal sections 2b disposed below the terminal sections 2a, at opposite positions, and at right angles with respect to said terminal sections 2a, the main bus 4 being connected in a horizontal direction. Connected to the end of the horizontally extended portion 29a of the bus link bus 29 is the upper terminal section 2'a of the other bus disconnecting switch 2', while below the terminal 2'a, a pair of terminal sections 2'b facing in opposite directions and disposed at right angles with respect to the terminal sections 2'a connect to the main bus 4' in a horizontal direction (Fig. 11). Thus, the difference in height between the axial centre lines of the aforesaid circuit breaker 1 and the line link bus 5, and the difference in height between the axial centre lines of the extended portion 29a of the bus link bus 29 and the main buses 4, 4', are both of the same value L. In other words, the axial distance in the direction of height between the terminal sections 3a and 3b of the line disconnecting switch 3, and the axial distance in the direction of height between the terminal sections 2a and 2b and 2'a and 2'b of the bus disconnecting switches 2 and 2', are both of the same value L. If, therefore, there is any difference in the directions of the terminal sections of the disconnecting switches 2, 2', 3 and in the number of terminals, most of the principal components directly related to the performance of built-in contactors, insulators and driving means can be made common. It will be appreciated that standardizing the principal components in this way can facilitate production of the equipment and further greatly reduce manufacturing costs.

Fig. 8 is a cross sectional view showing the construction of a disconnecting switch which differs from that shown in Fig. 4 but which has similar parts, as indicated by the same reference numerals. The disconnecting switch shown in Fig. 8 can be used as the line disconnecting switch 3 in the arrangement of Fig. 7.

Fig. 12 is a partly broken-away view showing more details of the gas circuit breaker 1 used in the arrangement shown in Fig. 7. Similar parts to those illustrated in the corresponding view of Fig. 5 are indicated by the same reference numerals.

As described above, the principal components of the disconnecting switches in the arrangement according to the present invention can be standardized, thus providing a gas-insulated switchgear at low manufacturing cost.

As has been described in detail, the present invention is intended to provide a gas-insulated switchgear which has excellent earthquake resistance, and good working efficiency in installation, while also being economical, and permits the connecting sections for respective pieces of equipment to be installed at the same level and accordingly directly on a ground foundation, and also permits connection of each piece of equipment in a simple manner.

## Claims

1. Gas-insulated switchgear comprising a plurality of disconnecting switches (2, 2', 3) which are disposed vertically and each of which is provided with at least one horizontal terminal section (2a, 2'a, 3a) at its upper end portion and at least one terminal section (2b, 2'b, 3'b) at its lower end portion, main buses (4, 4') and an outgoing bus (5) each being connected to one of said upper or lower terminal sections respectively and a horizontally disposed circuit breaker (1) being connected to the other of said upper or lower terminal sections of the respective disconnecting switches, all terminal sections of the disconnecting switches being arranged horizontally in the upright wall of the housing thereof and that the height between the axial centre lines of said upper and lower terminal sections having the same value (L).

2. Gas-insulated switchgear as defined in claim 1, wherein each disconnecting switch (2, 2', 3) has fixed and moving contact sections (10 and 9) which are insulated from and supported at the top and bottom ends of a tank respectively.

3. Gas-insulated switchgear as defined in claims 1 or 2 wherein the axial centre lines of the lower terminal sections (2b, 2'b, 3b) of the disconnecting switches, and the axial centre lines of the main buses (4, 4') and of the outgoing bus (5) are disposed in a first plane and the axial centre lines of the upper terminal sections (2a, 2'a, 3a) of the disconnecting switches, and the axial centre lines of the circuit breaker (1) and of link buses (6, 7) are disposed in a second plane.

4. Gas-insulated switchgear as defined in claims 1 or 2, wherein the axial centre line of the lower terminal section (3b) of a line disconnecting switch (3) and the axial centre line of the outgoing bus (5) are disposed in a first plane;

the axial centre line of the upper terminal section (3a) of the line disconnecting switch (3) and the axial centre line of the circuit breaker (1) are disposed in a second plane;

the main buses (4, 4') are arranged above said circuit breaker (1) and the axial centre lines thereof are disposed together with the axial centre lines of the lower terminal sections (2b, 2'b) of bus disconnecting switches (2, 2') in a third plane;

the axial centre lines of the upper terminal sections (2a, 2'a) of the bus disconnecting switches (2, 2') and the axial centre lines of horizontal portions (29a) of bus link buses are disposed in a fourth plane.

## Patentansprüche

1. Gasisolierte Schaltanlage mit einer Vielzahl von Trennschaltern (2, 2', 3), die senkrecht angeordnet sind und von denen jeder wenigstens einen horizontalen Anschluß (2a, 2'a, 3a) im oberen Bereich und wenigstens einen Anschluß (2b, 2'b, 3'b) im unteren Bereich enthält, mit Hauptsammelschienen (4, 4') und einer abgehenden Schiene (5), die jeweils mit einem der oberen bzw. unteren Anschlüsse verbunden sind und mit einem horizontal angeordneten Leistungsschalter (1), der mit dem anderen dieser oberen bzw. unteren Anschlüsse der jeweiligen Trennschalter verbunden ist, wobei sämtliche Anschlüsse der Trennschalter horizontal in der aufrechten Wand des Gehäuses derselben angeordnet sind und daß der Höhenabstand zwischen den Mittelachsen der oberen und unteren Anschlüsse jeweils denselben Wert (L) aufweist.

2. Gasisolierte Schaltanlage nach Anspruch 1, dadurch gekennzeichnet, daß jeder Trennschalter (2, 2', 3) feste und bewegliche Kontaktabschnitte (10 und 9) enthält, die jeweils gegenüber dem oberen und dem unteren Ende eines Tanks isoliert sind und von diesen Enden abgestützt werden.

3. Gasisolierte Schaltanlage nach Anspruch 1 oder 2, dadurch gekennzeichnet, daß die Mittelachsen der unteren Anschlüsse (2b, 2'b, 3b) der Trennschalter, und die Mittelachsen der Hauptsammelschienen (4, 4') sowie der abgehenden Schiene (5) in einer ersten Ebene und die Mittelachsen der oberen Anschlüsse (2a, 2'a, 3a) der Trennschalter, und die Mittelachsen des Leistungsschalters (1) sowie von Verbindungsschienen (6, 7) in einer zweiten Ebene angeordnet sind.

4. Gasisolierte Schaltanlage nach Anspruch 1 oder 2, dadurch gekennzeichnet, daß die Mittelachse des unteren Anschlusses (3b) eines Leitungstrennschalters (3) und die Mittelachse der abgehenden Schiene (5) in einer ersten Ebene angeordnet sind;

die Mittelachse des oberen Anschlusses (3a) des Leitungstrennschalters (3) und die Mittelachse des Leistungsschalters (1) in einer zweiten Ebene angeordnet sind;

die Hauptsammelschienen (4, 4') oberhalb des Leistungsschalters (1) und dessen Mittelachsen zusammen mit den Mittelachsen der unteren Anschlüsse (2b, 2'b) der Sammelschienentrennschalter (2, 2') in einer dritten Ebene angeordnet sind;

die Mittelachsen der oberen Anschlüsse (2a, 2'a) der Sammelschienentrennschalter (2, 2') und die Mittelachsen der horizontalen Abschnitte von Verbindungsschienen in einer vierten Ebene angeordnet sind.

## Revendications

1. Appareillage de commutation électrique à isolement gazeux comprenant plusieurs commutateurs de déconnexion (2, 2', 3) qui sont disposés verticalement et qui sont chacun dotés d'au moins une section de bornes horizontale (2a, 2'a, 3a) à leur partie terminale supérieure et d'au moins une section de bornes (2b, 2'b, 3'b) à leur partie terminale inférieure, des barres omnibus principales (4, 4') et une barre omnibus de sortie (5) qui sont chacune respectivement connectées à l'une desdites sections de bornes supérieures ou inférieures, et un disjoncteur (1) disposé horizontalement qui est connecté à l'autre desdites sections de bornes supérieures ou inférieures des commutateurs de déconnexion respectifs, toutes les sections de bornes des commutateurs de déconnexion étant disposées horizontalement dans la paroi verticale de leur boîtier et la différence de hauteur entre les axes de symétrie desdites sections de bornes supérieures et inférieures ayant une même valeur (L).

2. Appareillage de commutation électrique à isolement gazeux selon la revendication 1, où chaque commutateur de déconnexion (2, 2', 3) possède des sections de contacts fixe et mobile (10 et 9) qui sont montées sur les extrémités supérieure et inférieure d'une cuve et sont isolées de celles-ci.

3. Appareillage de commutation électrique à isolement gazeux selon la revendication 1 ou 2, où les axes de symétrie des sections de bornes inférieures (2b, 2'b, 3b) des commutateurs de déconnexion et les axes de symétrie des barres omnibus principales (4, 4') et de la barre omnibus de sortie (5) sont disposés dans un premier plan, tandis que les axes de symétrie des sections de bornes supérieures (2a, 2'a, 3a) des commutateurs de déconnexion et les axes de symétrie du disjoncteur (1) et des barres omnibus de liaison (6, 7) sont disposés dans un deuxième plan.

4. Appareillage de commutation à isolement gazeux selon la revendiçation 2, où:

l'axe de symétrie de la section de bornes inférieures (3b) d'un commutateur (3) de déconnexion de lignes et l'axe de symétrie de la barre omnibus de sortie (5) sont disposés dans un premier plan;

l'axe symétrie de la section de bornes supérieures (3a) du commutateur (3) de déconnexion de ligne et l'axe de symétrie du disjoncteur (1) sont disposés dans un deuxième plan;

les barres omnibus principales (4, 4') sont disposées au-dessus dudit disjoncteur (1) et leurs axes de symétrie sont disposés en même temps que les axes de symétrie des sections de bornes inférieures (2b, 2'b) des commutateurs (2, 2') de déconnexion de barres omnibus dans un troisième plan;

les axes de symétrie des sections de bornes supérieures (2a, 2'a) des commutateurs (2, 2') de déconnexion de barres omnibus et les axes de symétrie des parties horizontales (29a) de barres omnibus de liaison de barres omnibus sont disposés dans un quatrième plan.

FIG. 1

FIG. 2

FIG. 4

FIG. 3

FIG. 5

FIG. 12

**0 058 402**

FIG. 6

FIG. 7

3

FIG. 8

FIG. 9

FIG. 10

(a)        (b)

FIG. 11

(a)        (b)

4